# EUROPEAN PATENT SPECIFICATION

(11) **EP 2 902 738 B1**
(45) Date of publication and mention of the grant of the patent: **23.03.2022**
(21) Application number: 14425011.5
(22) Date of filing: 31.01.2014
(51) Int. Cl.: F26B 3/06, F26B 11/18, F26B 17/14, F26B 21/00

(54) **Static drying system for organic materials**
Statisches Trocknungssystem für organische Materialien
Système de séchage statique pour matières organiques

(43) Date of publication of application: 05.08.2015
(73) Proprietor: Yanmar Power Technology Co., Ltd., Osaka City (JP)
(72) Inventor: Bellissima, Alessandro, 50125 Firenze (IT); Magnani, Sandro, 50125 Firenze (IT); Mussi, Roberto, 50026 San Casciano val di Pesa (Firenze) (IT)
(74) Representative: Poindron, Cyrille

(56) References cited:
- DE-A1- 2 645 835
- GB-A- 480 590
- JP-A- 2010 159 943
- US-A- 1 239 216
- US-A- 3 300 873
- US-A- 3 302 297
- US-A1- 2014 026 483

## Description

### FIELD OF THE INVENTION

The present invention relates to a static drying system for organic materials. In particular this invention relates to a drying system to feed a gasifier plant and, more specifically, to a static drying system having the features disclosed in the preamble of claim 1 which follows.

### BACKGROUND OF THE INVENTION

Organic material is a material composed of organic compounds and not biologically active and it includes timbers, dead trees, yard clippings, wood chips, food wastes and papers. Organic materials are useful for getting energy from themselves. Also using organic material energy is desirable in view of energy cycle reducing CO2. Organic materials are burned themselves or convert to fuels (ex. Biodiesel, biogas etc.) And gasification using organic materials is major process and has been used as a biomass gas generator or a wood gas generator which converts wood chips into gas.

One of the organic materials, biomass have been used for source of gas in a gasifier plant. The generated gas from biomass is provided to a power generator, a boiler or a heating furnace and use of biomass gas makes easy application of the energy of organic materials. Biomass with excess moisture prevents temperature rising in the gasifier and the moisture gets into the generated gas. It decreases efficiency of gasification of organic materials of the biomass. Before gasification or combustion process of the organic material, excess moisture in the material should be driven off for efficient and stable operation of the gasification or the combustion. Thus organic material like biomass is dried before providing to a gasifier with a dryer.

There are several types of static dryer for organic material, those are something like a belt type dryer, a bed type dryer and a vertical type dryer. A belt type dryer exposes biomass on belts in hot air flow. The belt type dryer is available at low heat temperature but it requires large space for moving belts and flowing air. In the bed type dryer, materials are spread across a bed with small holes and air is pushed up through the holes under pressure. And the vertical type dryer has a vertical cylinder putted into biomass from the top and the biomass taken off at the bottom against heated air flow.

### Disclosure of Invention

### Problems to Be Solved by the Invention

Previously known dryers for organic materials require large space or many heating energy and they do not have high efficiency in view of energy for drying. The belt type dryer and the bed type dryer require large space for flowing drying air with high velocity, but the air path for drying material are not long. Almost of the drying air blowing against materials on the belt or the bed go through the materials and a part of the drying air contacts outer surfaces of the piled materials on the belt or the bed. Thus the length of the path in which the drying air contact with the materials becomes short comparing with the scale of the dryer and those requires high temperature air for the drying air. Next in the vertical type dryer, materials flow downward by gravity, while drying air usually flows to counter direction. It makes the length of the path in which the drying air contact with the materials not enough and the time for contacting with the materials. It has another problem that the materials block or bridge inside the cylinder.

Prior patent publication, JP2010-159943A, shows a wood chip dryer has an inlet of chips is from the upper part of a chamber and a conveyer of the chamber at the lower part. This discloses the hot gas flows into the chamber. However, the duct for hot air takes large space in the chamber and has a longer distance from the injection area.

Another prior patent publication, US7891114, discloses a system makes hot gas flow under a bed of drying biomass and the system uses waste heat from steam turbine as heat source of a biomass dryer.

Prior patent publication US 3 302 297 A discloses a static drying system having the features disclosed in the preamble of claim 1 which follows.

### Means for Solving the Problems

For solving the problems above, the present invention provides a static drying system for organic materials having a dryer body which stocks organic material inside and has an inlet in an upper portion, an extracting means connected to a bottom portion of the dryer body, and a blow-off duct of drying air inserted in an intermediate part of the dryer body, wherein the blow-off duct has one or more blow-off surface having plurality of holes through which the velocity vector of drying air is made have a component of horizontal direction and a component of downward, said static drying system being characterized in that said dryer body has sloping side walls, so that space between said side walls is wider toward the bottom of said dryer body and in that said system comprises sliding grates placed on a floor of the bottom portion of the dryer body and driven by actuators, so that sliding of said grates brings about ejection of dried organic materials through an opening in the bottom portion of the dryer body.

The present invention provides further comprising a drying air duct whose cross-sectional area is a lozenge.

The present invention provides further comprising a heat exchanger in which a drying air is heated by waste heat.

The present invention provides further comprising a top cover which seals the dryer body.

The present invention provides a static drying system characterized by further comprising injecting means. According to a method of operation thereof, the injecting means and the extracting means are driven by a request of a gasification system downstream from the drying system.

The present invention provides a static drying system characterized by further comprising a sensor of humidity of said organic material. According to a method of operation thereof, the injecting means and the extracting means are stopped by said sensor of humidity, when detected moisture of said organic material is over a designated value.

### EFFECT OF THE INVENTION

This invention provides a static drying system in accordance with claim 1 and methods of operation of a static drying system as claimed in claims 7 and 8. Claims 2-6 concern preferred embodiments of the static drying system of claim 1.

The claimed invention provides an actually wider surface for blowing holes than a usual dryer with a blow-off surface on the bottom, because the claimed invention comprises the blow-off surface having holes making drying air have a component of horizontal direction and a component of downward. This claimed invention prevents the organic materials from stuck in the blowing holes, because blowing holes are not made on the duct surfaces facing upward. Moreover, the claimed invention increases a length of a path in which drying air contacts with surfaces of the organic materials in comparison with a usual dryer having a duct with slit-shaped openings because the claimed invention generates a fine air stream with a plural of holes for blowing dry air. Drying with fine air brings uniformly dried materials and brings easy feeding and controlling of gasification. Especially uniformly dried materials allow easy gravity feeding and stable supply of materials and allow stable supply of gas from the materials.

The claimed invention provides a duct having a rhombus shape duct of the invention can be easily diverted with a square duct by rolling the square duct by 90 degree rolling.

The claimed invention provides a dry capability of the dryer is improved in spite of depressing the energy consumption.

With the claimed invention, heat loss in the dryer is decreased with the top cover and the dry capability of the dryer is improved.

With the claimed invention, the static drying system can be operated based on the condition of the gasification system.

With the claimed invention, the static drying system can prevent organic materials which are not acceptable for the gasification system with too much moisture from being sent to the gasification system.

### BRIEF DESCRIPTION OF DRAWINGS

Fig. 1 is a diagram showing organic material gasification plant.
Fig. 2 is a plan view of a organic material dry system.
Fig. 3 is a front view of the dry system.
Fig. 4 is a perspective view of the dry system.
Fig. 5 is a side cut view of the dry system.
Fig. 6 is a plan cut view of the dry system.
Fig. 7 is a front cut view of inner ducts.
Fig. 8 is a diagram showing air flow in the dryer body.
Fig. 9 is a diagram showing variations of front cut view of inner ducts.

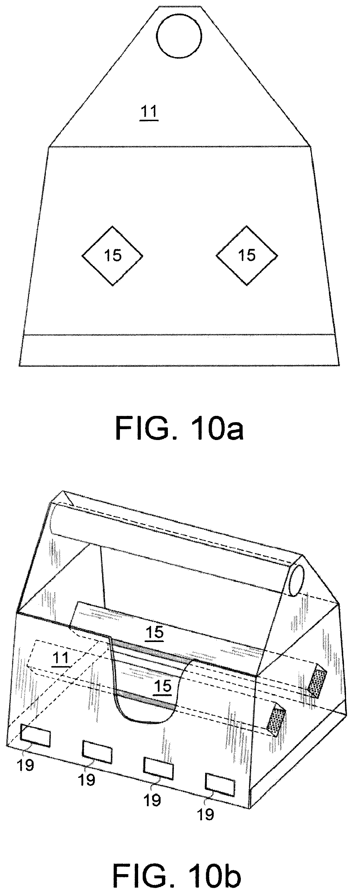

Fig. 10 is a diagram showing a front view and a perspective view of the dryer body.

### DESCRIPTION OF NOTATIONS

- 1: static dry system
- 2: gasifier
- 4: heat exchanger
- 7: gas generator
- 8: gas flare
- 10: dryer
- 11: dryer body
- 12: top cover
- 13: base frame
- 14: branch duct
- 15: inner duct
- 20: feeder
- 30: outlet conveyer

### DETAILED DESCRIPTION OF THE INVENTION

The present invention provides a static dry system for organic material which efficiently and effectively dries organic materials. For explaining use of a static dry system for organic material the present invention, an embodiment is described as follows. However the embodiment is provided for supporting understanding of the present invention, the present invention should be understood by the idea of the present invention and is not limited by only the described embodiment.

### Gasification Plant

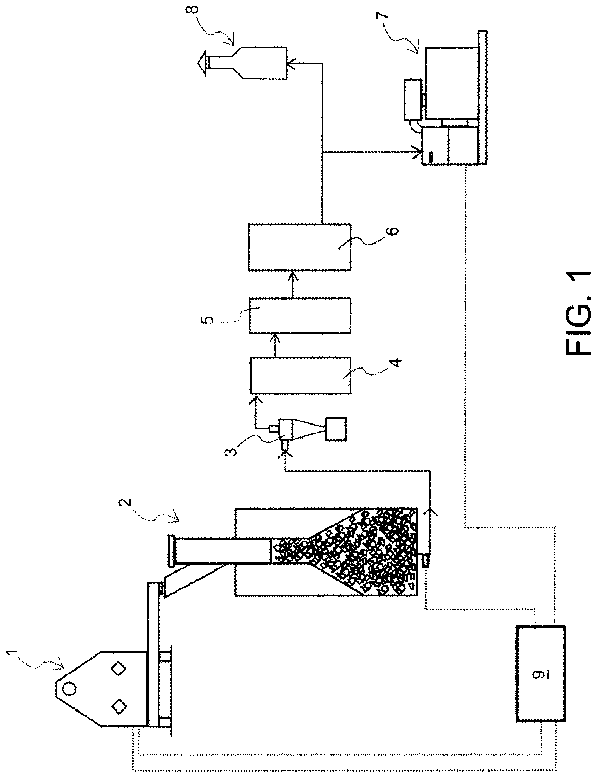

The organic material gasification plant shown in Fig. 1 includes a static dry system 1, a gasifier 2, a cyclone 3, a heat exchanger 4, a scrubber 5, a gas filter 6 and a gas generator 7 and/or a gas flare 8. In the organic material gasification plant, the static dry system 1 dries organic materials which are like biomass and organic industrial waste, the gasifier 2 makes gas from dried organic materials.

And gas from the gasifier 2 is introduced into the cyclone 3 where dusts in the gas are removed and is introduced into the heat exchanger 4. In the heat exchanger 4, the gas is cooled with heat transfer to a medium, cooling air, water, or oil. The gas cooled with the heat exchanger 4 is introduced into the scrubber 5 and purified for fuel gas. The purified gas is provided to the gas generator 7 or the gas flare through the gas filter. The gas generator 7 generates electricity with running a gas engine, and excess gas provided to the gas generator 7 is send to the gas flare 8 and burn.

In the embodiment of the organic material gasification plant, the static dry system 1 may dry organic materials with moisture less than 20% by weight. For drying materials, waste heats of the gas generator 7 and/or the gas flare 8 may be used in the dry system 1. The exhaust gas of the gas generator 7 and/or the gas flare 8 or heated air with the exhaust gas also useful for heating source in the dry system 1.

And shown in Fig. 1, a controller 9 may be connected with sensors provided in the static dry system 1 for controlling pace for drying material. Moisture of the organic material within the static dry system 1 is checked by the sensor connected with the controller 9 and the organic material is extracted from the static dry system 1 when the moisture is lower than predetermined value. Also the controller 9 may be connected with sensors provided in the gasifier 2 and the gas generator 7 and controls extracting materials from the static dry system 1 and feeding materials to the gasifier 2 for controlling output of the gas generator 7.

### Dry System

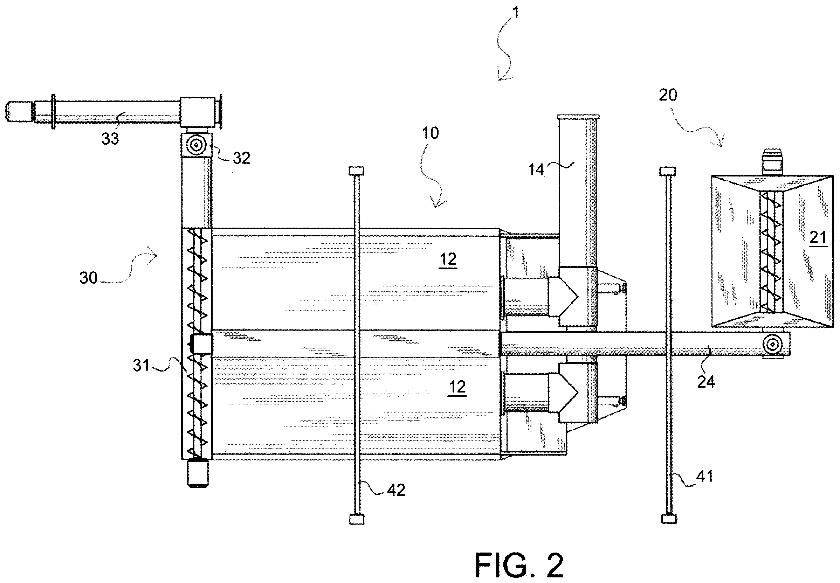

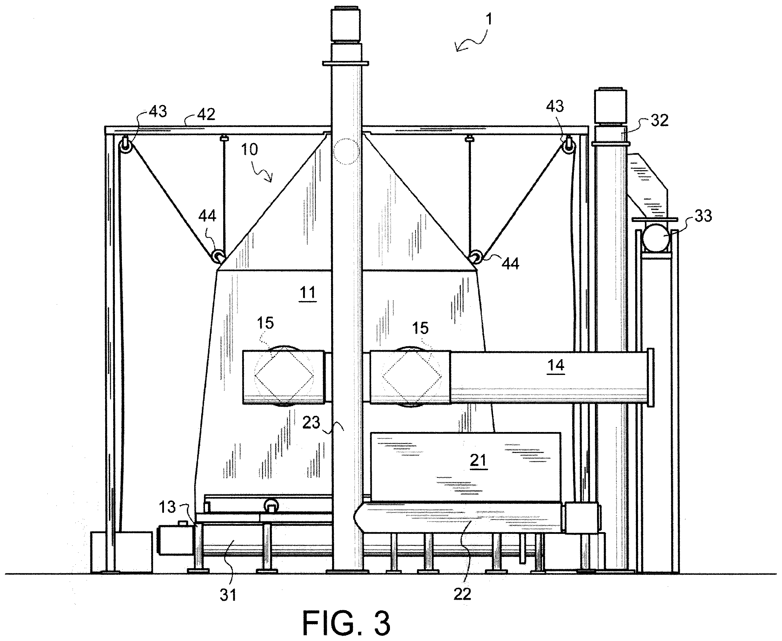

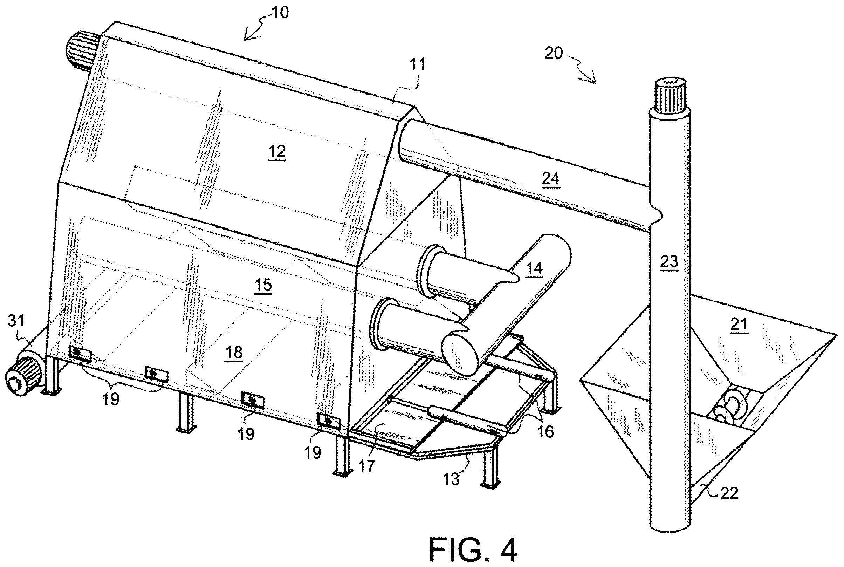

As shown by Figs. 2 to 4, an embodiment of the static dry system includes a dryer 10, a feeder 20 and an outlet conveyer 30. Organic materials to be dried are introduced to the feeder 20 and the feeder introduces the organic materials into the dryer 10. The dryer 10 stocks and dries the organic materials at inside. The dried materials are taken out from the dryer 10 and are conveyed by the outlet conveyer 30.

And the outlet conveyer 30 feeds the dried materials into the gasifier 2 of Fig. 1. The dry system 1 also includes support frames 41 and 42. The support frame 41 supports a conveyer of the feeder 20 and the support frame 42 supports the top of the dryer 10 with the conveyer. The support frame 42 has fixed pulleys 43 on the top part of it and ropes put through a pulley 44 and the fixed pulley 43 are connected with the support frame 42. The pulleys 44 are fixed on the lower part of the top cover of the dryer 10. Thus the top cover of the dryer 10 is opened by pulling the rope down.

The dry system may include heat exchanger in which a drying air is heated by waste heat from the gas generator 7, the gas flare 8 or heat exchanger 4. Using waste heat increases energy efficiency for drying materials.

### Feeder

The feeder 20 has a hopper 21 and screw conveyors 22, 23 and 24. The hopper 21 is connected with the screw conveyor 22 on the bottom. The screw conveyor 22 connects to the screw conveyor 23 and the screw conveyor 23 connects to the screw conveyor 24. The screw conveyor 24 is connected to the dryer 10.

Materials thrown into the hopper 21 goes down with gravity and materials reached bottom of the hopper 21 are conveyed to the dryer 10 through the screw conveyors 23, 24, The screw conveyor 24 is arranged along with front-back direction and one end of the screw conveyor 24 is inserted to the dryer 10. And materials thrown into the hopper 21 are fed into the dryer 10. Screw conveyors 22, 23 and 24 are powered by electric motors and those electric motors are controlled by a controller (not shown).

### Dryer

The materials conveyed from the feeder 20 are introduced into the dryer 10. The dryer 10 can stock static materials fully within it and dry. Dried materials by the dryer 10 are ejected to the outlet conveyor 30. The dryer 10 has a dryer body 11, top covers 12, a base frame 13, a branch duct 14, and inner ducts 15. The branch duct 14 and inner ducts 15 comprise a blow-off duct of drying air.

The dryer body 11 has an opening for introducing materials on front of the top part or the upper part and the screw conveyor 24 is inserted into the dryer body 11 through the opening. Thus materials introduced into the dryer body 11 stack form the bottom part of the dryer body 11.

The blow-off duct arranged to be inserted in an intermediate part or middle part of the dryer body 11 with the inner duct 15.

Further the dryer 10 has actuators 16, a floor 17 and moving grates 18. The dryer body 11 has openings on bottom of the front and back for the floor 17 and for extracting dried materials.

The dryer body 11 puts the top cover 12 on each left and right top of itself and the top covers 12 are provided like a slope roof on the dryer body 11. The dryer body 11 has front and back walls which are vertical walls and has left and right walls which are slightly sloping wall.

The dryer body 11 has openings 19 made through at both side of the bottom. Through the opening 19, air inside of the dryer body 11 is exhausted. And the dryer body 11 is made wider at lower part. Space between side walls is widen toward the bottom and it prevents blocking or bridging of the materials inside the dryer body 11.

The top part of the dryer body looks a triangle and the middle part looks a trapezoid in front view. At the shape of the cavity made with the dryer body 11 and top covers 12, the area horizontally cut becomes smaller with the height is up. Thus, the upper part of the dryer body 11 is made a gable shape with the top covers 12 and vertical walls facing each other.

The branch duct 14 is connected to the front wall of the middle part of the dryer body 11. Each branched ducts of the branch duct 14 connects to inner ducts 15. The inner ducts 15 locate in the dryer body 11 along with the front-back direction of the dryer body 11. The front end of the inner duct 15 is fixed on the front wall of the dryer body 11 and the back end is fixed on the back wall. Drying air for the static materials stocked in the dryer body 11 flows into the dryer body 11 through the branch duct 14 and inner ducts 15.

The dryer body 11 lies on the base frame 13 and is lifted from the ground. The front part of the base frame is connected with one end of the actuators 16. The other end of the actuator 16 is connected with the moving gates 18. The moving gates 18 are placed on the floor 17of the bottom of the dryer body 11 and are slide in front-back direction with the actuators 16. In this embodiment, the actuator 16 is a hydraulic cylinder.

On the floor, the moving grates 18 are provided along with left and right direction. The back side edge of each of the grates 18 is made higher than the front side edge and the back surface of the grate 18 is vertical and the front surface is sloped. Thus the grate 18 looks like a right triangle in side view. When actuators 16 extends rods to the back ward, the moving gates 18 slide to the back ward and materials stocked in the dryer body 11 are ejected through an opening provided at a bottom part of the dryer body 11.

Dried materials in the bottom of the dryer body 11 are ejected to the outlet conveyer,30 from the back end of the dryer body 11. Actuators 16 are controlled by the controller (not shown) and ejection of materials from the dryer 10 is controlled.

### Outlet conveyer

The dryer body 11 is connected with the outlet conveyer 30 at the back end. The outlet conveyer 30 includes conveyers 31, 32 and 33. The conveyer 31 is provided along with the back wall of the dryer body 11 and is connected with the bottom of the back wall.

The upper of the conveyer 31 is opened so as to introduce dried materials ejected from the dryer body 11. Thus the outlet conveyer 30 receives the dried materials from the dryer 10. The received materials are conveyed to the gasifier 2. Screw conveyors 31, 32 and 33 are powered by electric motors and those electric motors are controlled by the controller (not shown).

### Inside of the dryer

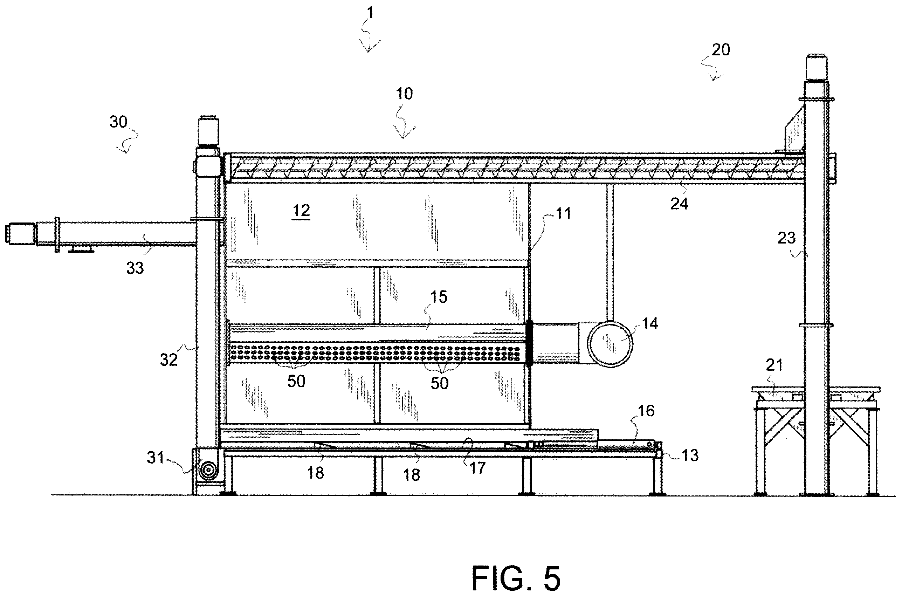

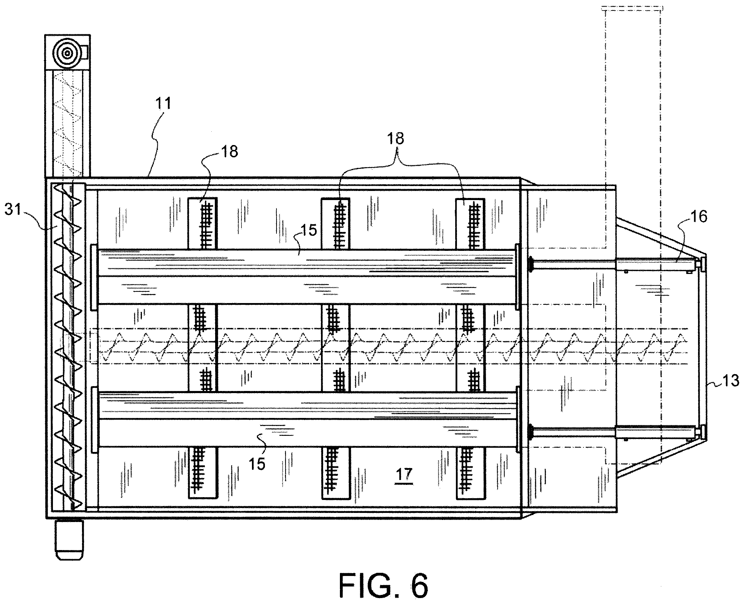

The inside of the dryer 11 is shown in Fig. 5 and 6. In the dryer body 11, the inner ducts 15 are extended from the front wall to the back wall. The front end of the inner duct 15 is attached on the inside of the front wall and the rear end of the inner duct 15 is attached on the inside of the back wall. Thus the inner ducts 15 are provided throughout the length of the dryer body 11 and are arranged parallel at a middle part of the inside in height.

Above the inner ducts 15, the conveyer 24 inserted into the dryer body 11 and the inserted part of the conveyer 24 has openings feeding materials. Thus the conveyer 24 is inserted into an inlet at an upper portion of the dryer body. The bottom part of the conveyer 24 has rectangular holes along its length that let the materials fall in the dryer body 11, gradually fill them to the top homogeneously. The materials fed into fall on the floor 17 and are stocked in the dryer body 11.

Below the inner ducts 15, the moving gates 18 are positioned and can slide back and forth. On the upper surface of the floor 17, grates 18 are slide along with the side direction. The moving gates 18 are connected with the actuator 16 fixed on the base frame and are driven back and forth by the actuator 16. Thus the moving gates 18 are moved to the machine direction and floor 17 lies. When the moving gates 18 are moved back and forth by the actuators 16, materials stored within the dryer body 11 are ejected to the outlet conveyer 30.

### Air flow

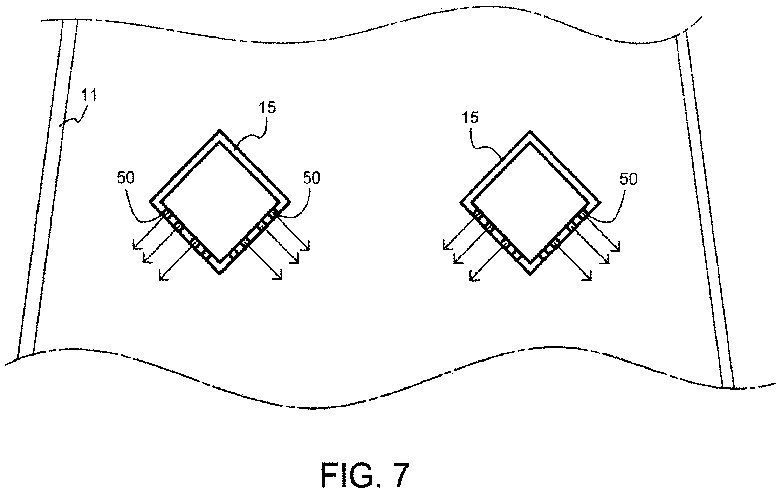

As shown in Fig. 5 and 7, the inner duct 15 has plurality of an air hole 50 on all over the bottom surface. Air holes 50 can be made through downwardly facing surfaces of the inner duct 15. Air holes 50 are opened diagonally downward and air for drying from the branch duct 14 flows into the dryer body 11 through air holes 50. Air through air holes 50 becomes fine air flow and flows smooth between materials within the dryer body 11.

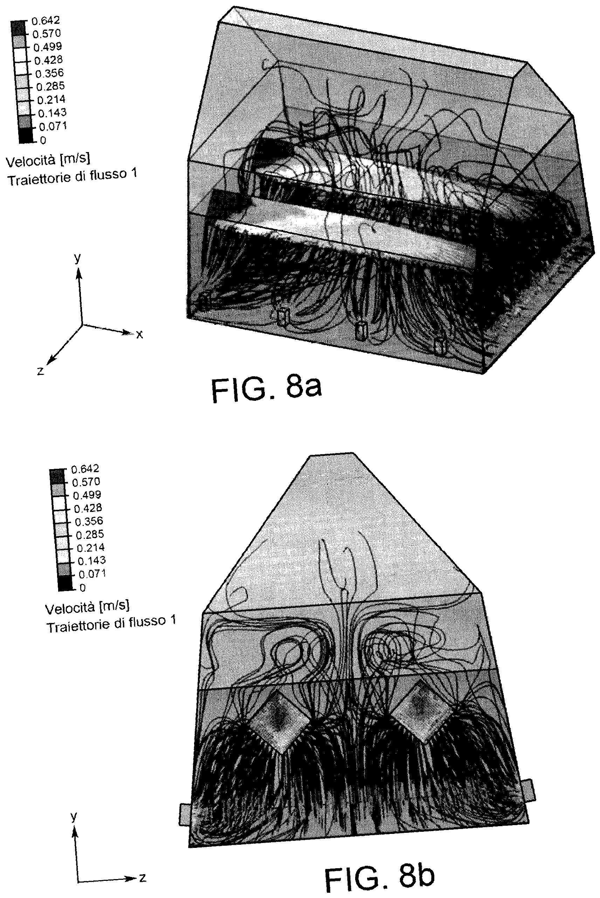

In the present invention, drying air blown from the inner duct 15 goes down and widely toward the bottom of the dryer body 11 as shown in Fig. 8, (a) is a perspective view showing air flow in the dryer body 11 and (b) is a front view showing air flow in the dryer body 11. Within the dryer body 11, drying air is widely spread downward from inner ducts 15 and materials stacked under the inner ducts 15 are dried prior to the other materials. The drying air from the inner duct 15 spread widely makes fine air streams. Moreover, the dryer body 15 has openings near the bottom respectively both on the left side and right side. The almost all of the drying air exits the dryer body 11. As shown in Fig 8, the air outlet from the bottom openings 19 increases the internal volume of the dryer body 11 reached by the drying air as much as possible. In addition, the size of the openings can be manually increased or decreased in order to optimize system process at different loads, thus increasing energy efficiency.

Air for drying materials may be not hot but low moisture air and the low moisture air will get moisture from the materials stocked in the dryer body 11. The low moisture air gets moisture by chemical equilibrium. Thus even low temperature air or low speed air flow would useful as drying air.

When hot air, higher temperature air than stocked materials or the air in the dryer body 11, is introduced into the dryer body 11 through the inner duct 15, the air is firstly bowled downward and goes through spaces between materials. The fine air flows made by openings of the inner duct 15 smoothly go into spaces between materials like rubbing surfaces of the materials. It makes the pass of the drying air long in the dryer body 11.

### Feature of the Duct

In the present invention, the inner duct 15 is made of square pipe as shown in Fig. 7. The square pipe is rotated so as one of corners to be lowest. And the cross-sectional area of the inner duct 15 is made a lozenge. Two neighboring lower surfaces of the square pipe are blow-off surfaces that blow drying air. The blow-off surface faces downward and holes are opened through the normal direction of the blow-off surface. Thus holes on the blow-off surface of the inner duct 15 make drying air have a component of horizontal direction and a component of downward. Further, holes are opened downward and materials in the dryer body 11 moves downward. It prevents materials stack into holes 50, keeps holes 50 clear and provides fine dry air from the inner ducts 15.

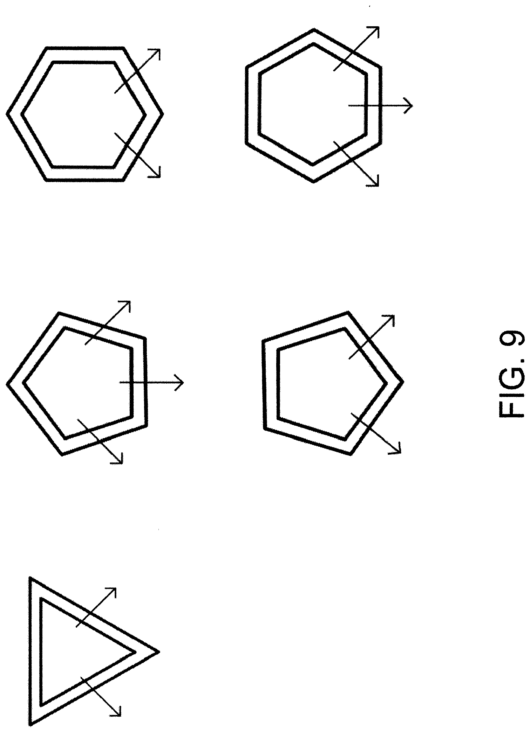

Other variation of the inner duct 15 as blow-off duct is shown in Fig.9. Cross-sectional shapes for the inner duct 15 are inverted triangular shape, pentagon, inverted pentagon, hexagon with a lowest corner and two lowest corner. Holes for blowing air are made through flat surface of pipes. Because opening holes on a flat surface is easy. Also holes may be made on a surface facing verticality downward additionally.

### Top cover

The top cover 12 is put on and seals the dryer body 11. And shown on Fig. 12, the dryer body 11 has an opening for introducing materials on top part of the front, openings for dry air on middle part of the and two opening to be sealed with top covers 12 on left and right side of top part. The top cover 12 increases the drying air residence time inside the dryer body 11 and also prevents water from pouring in or dewing.

### Control of the dryer system

In the above configuration of the invention, as shown in Fig. 1, the controller 9 may be connected with a sensor provided in the dryer body 11, with the actuators 16, the feeder 20 and the outlet conveyer 30. And it would control feeding materials to the gasifier 2. The feeding may be controlled based on the output of the gasifier 2 or the generator 7.

The dryer system 1 may be operated based on a request from the gasifier 2. The gasifier 2 is influenced by amount of materials feed into the gasifier 2. Thus controlling the dryer system 1 based on the state of the gasifier 2 makes a good operation of the gasifier 2 and a good gas.

The dryer system 1 may be operated based on moisture of organic materials. The gasifier 2 is influenced by the moisture of materials feed into the gasifier 2. Thus controlling the dryer system 1 based on moisture of the materials makes a good operation of the gasifier 2. The dryer system 1 may have a humidity sensor or a moisture sensor detecting the materials or the air within the dryer system 1 and the moisture of the materials is estimated. In the dryer system 1, the feeder 20 and the outlet conveyer 30 are operated based on the moisture of organic materials in the dryer system 1. Thus it prevents materials with not acceptable moisture from the gasification system.

The dryer system 1 may controlled based on a predetermined moisture value of organic materials. Moisture of organic materials is detected in the dryer system 1 and the operation of the dryer system 1 is controlled by the value of the moisture which is predetermined with the capacity or the performance of the dryer system 1. When the moisture contained in organic material is same or higher than the predetermined value, the dryer system 1 stops the feeder 20, the outlet conveyer 30 and/or moving grates 18. And the dryer system 1 starts operating of the feeder 20, the outlet conveyer 30 and/or moving grates 18 when the moisture of organic materials is lower than the predetermined value.

### About the invention

The invention above described, in reference to the preferred embodiment, it is apparent that there may be modifications or variations of the invention which are within the scope of the invention as defined in the claims.

There are many different materials which may be used within the system, and the dryer system may be in one of a variety of different configurations.

### Industrial Applicability

This invention is applicable to static drying system for organic materials.

## Claims

1. A static drying system (1) for organic materials comprising;
a dryer body (11) which stocks organic material inside, wherein the dryer body (11) has an inlet in an upper portion
an extracting means connected to a bottom portion of the dryer body (11), and
a blow-off duct (15) of drying air inserted in an intermediate part of the dryer body (11),
wherein the blow-off duct (15) has one or more blow-off surface having plurality of holes (50) through which the velocity vector of drying air is made have a component of horizontal direction and a component of downward,
said static drying system (1) being **characterized in that** said dryer body (11) has sloping side walls, so that space between said side walls is wider toward the bottom of said dryer body (11) and **in that** said system (1) comprises back and forth sliding grates (18) placed on a floor (17) of the bottom portion of the dryer body (11) and below the blow-off duct (15) and driven by actuators (16), whereby the grates are shaped so that the back and forth sliding of said grates (18) brings about ejection of dried organic materials through an opening in the bottom portion of the dryer body (11).

2. The static drying system (1) according to said Claim 1, **characterized by** comprising a drying air duct (15) whose cross-sectional area is a lozenge.

3. The static drying system (1) according to said Claim 1, **characterized by** further comprising a heat exchanger (4) in which a drying air is heated by waste heat.

4. The static drying system (1) according to said Claim 3, **characterized by** further comprising a top cover (12) which seals the dryer body (11).

5. The static drying system (1) according to said Claim 1, **characterized by** comprising injecting means.

6. The static drying system (1) according to said Claim 5, **characterized by** comprising a sensor of humidity of said organic material.

7. Method of operation of the static drying system (1) of claim 5, wherein the injecting means and the extracting means are driven by a request of a gasification system (2) downstream from the drying system (1).

8. Method of operation of the static drying system (1) of claim 6, wherein the injecting means and the extracting means are stopped by said sensor of humidity, when detected moisture of said organic material is over a designated value.

## Patentansprüche

1. Statisches Trocknungssystem (1) für organische Materialien, das Folgendes umfasst;
ein Trocknergehäuse (11) in dem sich ein organisches Material befindet, wobei das Trocknergehäuse (11) in einem oberen Abschnitt einen Einlass aufweist
ein Extraktionsmittel, das mit einem Bodenabschnitt des Trocknergehäuses (11) verbunden ist, und
einen Ausblaskanal (15) mit Trocknungsluft, der in ein Zwischenteil des Trocknergehäuses (11) eingesetzt ist,
wobei der Ausblaskanal (15) eine oder mehrere Ausblasflächen aufweist, die eine Vielzahl von Löchern (50) aufweist, durch die der Geschwindigkeitsvektor von Trocknungsluft verläuft, um eine Komponente einer horizontalen Richtung und eine Komponente von abwärts aufzuweisen,
wobei das statische Trocknungssystem (1) **dadurch gekennzeichnet ist, dass** das Trocknergehäuse (11) geneigte Seitenwände aufweist, derart, dass ein Raum zwischen den Seitenwänden zum Boden des Trocknergehäuses (11) hin breiter ist, und dadurch, dass das System (1) rückwärts und vorwärts gleitende Gitter (18) umfasst, die auf einem Boden (17) des Bodenabschnitts des Trocknergehäuses (11) und unter dem Ausblaskanal (15) angeordnet sind und von Aktuatoren (16) angetrieben werden, wodurch die Gitter derart geformt sind, dass das Rückwärts- und Vorwärtsgleiten der Gitter (18) den Auswurf von getrockneten organischen Materialien durch eine Öffnung im Bodenabschnitt des Trocknergehäuses (11) bewirkt.

2. Statisches Trocknungssystem (1) nach Anspruch 1, **gekennzeichnet durch** Umfassen eines Trocknungsluftkanals (15), dessen Querschnittsfläche eine Raute ist.

3. Statisches Trocknungssystem (1) nach Anspruch 1, **gekennzeichnet durch** weiteres Umfassen eines Wärmetauschers (4), in dem eine Trocknungsluft durch Abwärme erwärmt wird.

4. Statisches Trocknungssystem (1) nach Anspruch 3, **gekennzeichnet durch** weiteres Umfassen einer oberen Abdeckung (12), die das Trocknergehäuse (11) versiegelt.

5. Statisches Trocknungssystem (1) nach Anspruch 1, **gekennzeichnet durch** Umfassen von Injektionsmitteln.

6. Statisches Trocknungssystem (1) nach Anspruch 5, **gekennzeichnet durch** Umfassen eines Sensors für Feuchtigkeit des organischen Materials.

7. Betriebsverfahren des statischen Trocknungssystems (1) nach Anspruch 5, wobei die Injektionsmittel und die Extraktionsmittel durch eine Anforderung eines Vergasungssystems (2) stromabwärts vom Trocknungssystem (1) angetrieben werden.

8. Betriebsverfahren des statischen Trocknungssystems (1) nach Anspruch 6, wobei die Injektionsmittel und die Extraktionsmittel vom Feuchtigkeitssensor gestoppt werden, wenn eine detektierte Feuchte des organischen Materials über einem angegebenen Wert liegt.

## Revendications

1. Système de séchage statique (1) pour matières organiques comprenant :
un corps de séchoir (11) qui stocke les matières organiques à l'intérieur de ce dernier, dans lequel le corps de séchoir (11) a une entrée dans une partie supérieure,
un moyen d'extraction raccordé à une partie inférieure du corps de séchoir (11), et
un conduit de soufflage (15) pour sécher l'air inséré dans une partie intermédiaire du corps de séchoir (11),
dans lequel le conduit de soufflage (15) a une ou plusieurs surfaces de soufflage ayant une pluralité de trous (50) à travers lesquels le vecteur de vitesse de l'air de séchage est induit pour avoir une composante de direction horizontale et une composante descendante,
ledit système de séchage statique (1) étant **caractérisé en ce que** ledit corps de séchoir (11) a des parois latérales inclinées, de sorte que l'espace entre lesdites parois latérales est plus large vers le fond dudit corps de séchoir (11) et **en ce que** ledit système (1) comprend des grilles coulissantes d'avant en arrière (18) placées sur un plancher (17) de la partie inférieure du corps de séchoir (11) et au-dessous du conduit de soufflage (15) et entraînées par des actionneurs (16), moyennant quoi les grilles sont formées de sorte que le coulissement d'avant en arrière desdites grilles (18) entraîne l'éjection des matières organiques séchées à travers une ouverture dans la partie inférieure du corps de séchoir (11).

2. Système de séchage statique (1) selon la revendication 1, **caractérisé en ce qu'**il comprend un conduit d'air de séchage (15) dont la section transversale est un losange.

3. Système de séchage statique (1) selon la revendication 1, **caractérisé en ce qu'**il comprend en outre un échangeur de chaleur (4) dans lequel un air de séchage est chauffé par la chaleur résiduelle.

4. Système de séchage statique (1) selon la revendication 3, **caractérisé en ce qu'**il comprend un couvercle supérieur (12) qui scelle le corps de séchoir (11).

5. Système de séchage statique (1) selon la revendication 1, **caractérisé en ce qu'**il comprend un moyen d'injection.

6. Système de séchage statique (1) selon la revendication 5, **caractérisé en ce qu'**il comprend un capteur d'humidité de ladite matière organique.

7. Procédé de fonctionnement du système de séchage statique (1) selon la revendication 5, dans lequel le moyen d'injection et le moyen d'extraction sont entraînés par une requête d'un système de gazéification (2) en aval du système de séchage (1).

8. Procédé de fonctionnement du système de séchage statique (1) selon la revendication 6, dans lequel le moyen d'injection et le moyen d'extraction sont arrêtés par ledit capteur d'humidité, lorsque l'humidité détectée de ladite matière organique est supérieure à une valeur désignée.
